# EUROPEAN PATENT SPECIFICATION

(11) **EP 3 871 550 B1**
(45) Date of publication and mention of the grant of the patent: **09.12.2026**
(21) Application number: 21169868.3
(22) Date of filing: 06.03.2013
(51) Int. Cl.: A44B 13/00, F16B 45/02

(54) **SYSTEMS AND METHODS FOR A LOCKING DOUBLE CARABINEER**
SYSTEME UND VERFAHREN FÜR EINEN DOPPELTEN VERRIEGELUNGSKARABINER
SYSTÈMES ET PROCÉDÉS POUR UN DOUBLE MOUSQUETON DE VERROUILLAGE

(30) Priority: 07.03.2012 CN 201220083757 U; 05.01.2013 US 201361749299 P
(43) Date of publication of application: 01.09.2021
(62) Document number(s) of the earlier application(s) in accordance with Art. 76 EPC: 13757931.4 / 2 822 417
(73) Proprietor: Nite Ize, Inc., Boulder, Colorado 80301 (US)
(72) Inventor: LIANG, Robin, Yangjiang Guangdong, 529500 (CN)
(74) Representative: Angerhausen, Christoph

(56) References cited:
- EP-A1- 1 178 227
- DE-U1- 202004 003 908
- US-A1- 2009 000 086

## Description

### BACKGROUND

Carabineers find usage in many situations for securely hanging objects from a variety of attachment points. At times, the gate on a carabineer may be dislodged by occurrences during movement and may result in the opening of the gate and the detachment of the carabineer. This detachment is undesirable.

A locking carabineer with the features of the preamble of claim 1 is disclosed in DE 20 2004 003908 U1. Further carabineers are described in US 2009/000086 A1 and EP 1 178 227 A1.

### SUMMARY

According to the present invention, a locking double carabineer is defined in claim 1.

The locking carabineer includes a carabineer body having a first hook, the first hook having a first opening. The locking carabineer further includes a first gate interconnected with the carabineer body, such that the first gate closes the first opening. The locking carabineer further includes a first slide configured to slide up and down the first gate, the first slide having a first and second position in relation to the carabineer body, the first position locking the first gate and the second position unlocking the first gate. The carbineer body has a first notch, proximate to where the first gate is interconnected with the carabineer body, the first notch sized to receive the first slide when the first slide is in the first position. The first slide prevents the first gate from rotating to an open position by pressing against the first notch. The carabineer body includes a second hook, the second hook having a second opening, and further includes a second gate interconnected with the carabineer body, such that the second gate closes the first opening and a second slide configured to slide up and down the second gate, the second slide having a third and fourth position in relation to the carabineer body, the third position locking the second gate and the fourth position unlocking the second gate. The carbineer body has a first notch, proximate to where the first gate is interconnected with the carabineer body, the first notch sized to receive the first slide when the first slide is in the first position, and the first slide prevents the first gate from rotating to an open position by pressing against the first notch. The first and second hooks form an s- shape in the carabineer body. The first and second gates are wireframe gates, and the wireframe gates include a the first and second slide, and each include a tab, the tab sized to fit inside the wireframe to prevent the first and second gates from sliding off an end of the wireframe gates. The first and second slides each have a notch configured to allow removal of the first and second slides. In another alternative not according to the invention, the first and second slides each have a first and second opening at each end, and the first and second slides narrow gradually from the first and second openings, such that the narrowing at the second opening prevents the first and second slides from sliding off of the first and second carabineer gates, respectively.

A method of using an inventive locking double carabineer (not falling under the present invention) includes providing a locking double carabineer having a slide on each of a first and second gate is further described; sliding the slide on the first gate from a first locked position to a second unlocked position; and opening the first gate. Optionally, the method further includes closing the first gate sliding the slide on the first gate from the second unlocked position to the first locked position, wherein the first gate is locked. The first locked position positions the slide of the first gate in a notch in a body of the double locking carabineer, the slide preventing the first gate from opening when the slide is in the notch. The notch is located near an interconnection point of the first gate with the body of the double carabineer. The body includes a first and second hook, and the first and second hooks form an s-shape in the carabineer body. The first and second gates are wireframe gates, and the wireframe gates include a the first and second slide, and each include a tab, the tab sized to fit inside the wireframe to prevent the first and second slides from sliding off an end of the wireframe gates.

### BRIEF DESCRIPTION OF THE DRAWINGS

Fig. 1 shows a front view of one embodiment of a locking double carabineer not part of the invention;
Fig. 2 shows a front view of the hook portion of the locking double carabineer of Fig. 1 not part of the invention ;
Fig. 3 shows the gate portion of the locking double carabineer of Fig. 1 not part of the invention;
Fig. 4a shows the lock portion of the locking double carabineer of Fig. 1 not part of the invention; Fig. 4b shows a cross-section of the lock portion of Fig. 4a not part of the invention; and
Figs. 5a and 5b show another embodiment of a locking double carabineer. a locking carabineer, according to the present invention.

### DETAILED DESCRIPTION OF THE DRAWINGS

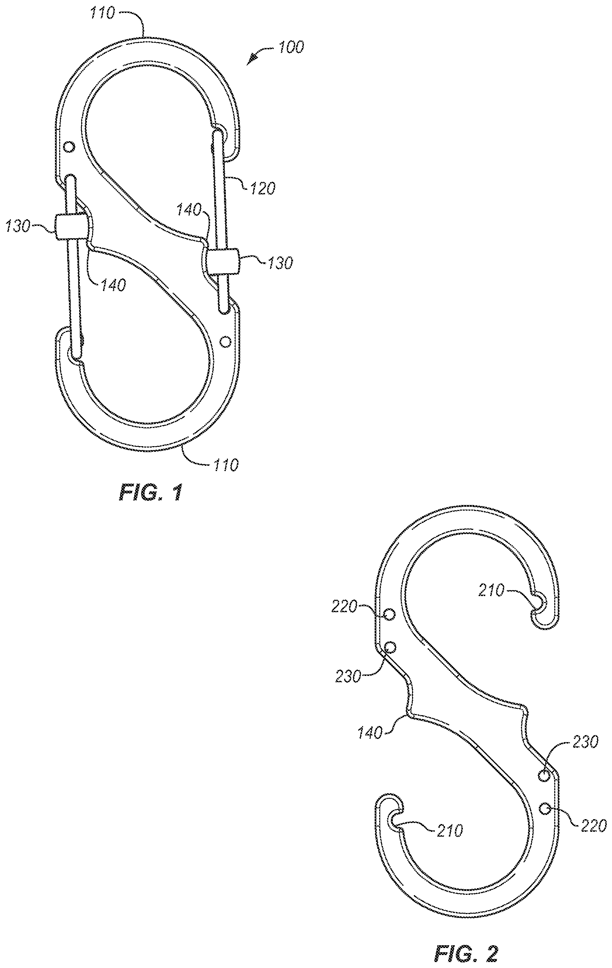

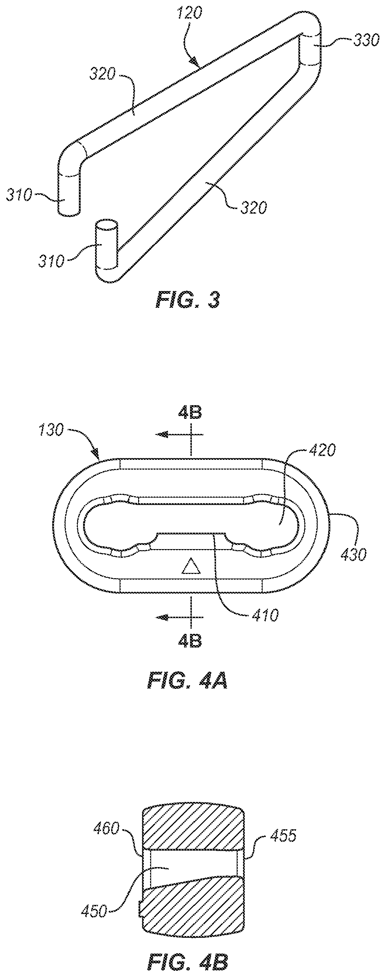

Fig. 1 shows one embodiment of a locking double carabineer (LDC) 100 not part of the invention. LDC 100 includes a top and bottom hook 110. Gates 120 are oriented to close over each hook 1 10. Sliding lock 130 provides for the locking of the gates 120 of the LDC 100 by sliding to a locking position in notch 140. As is clear from the figure, sliding lock 130 braces the gates 120 of the LDC 100. Therefore, even when pressure is applied to the gates 120, they will not open. The sliding lock 130 may slide up and down the gate 120. Fig. 2 shows the hook 1 10 portions of the LDC 100 with the additional hardware removed. The hook portion includes gate apertures 220, 230 and gate notches 210. Fig. 3 shows gate 120. Gate 120 includes pegs 310, angled portion 330, and arms 320.

Fig. 4a shows the sliding lock 130 not part of the invention. The sliding lock 130 includes an aperture for receiving the gate 120, an outer body 430, and tab 410, which prevents the sliding lock 130 from sliding off of the gate 120. This reduced area of thickness is visible in Fig. 4b at end 455. ) The dimensions of end 460 and space 450 are such that they may accommodate and easily slide over the gate 120, while the tab 410 makes end 455 too thin to pass over the end of the gate 120.

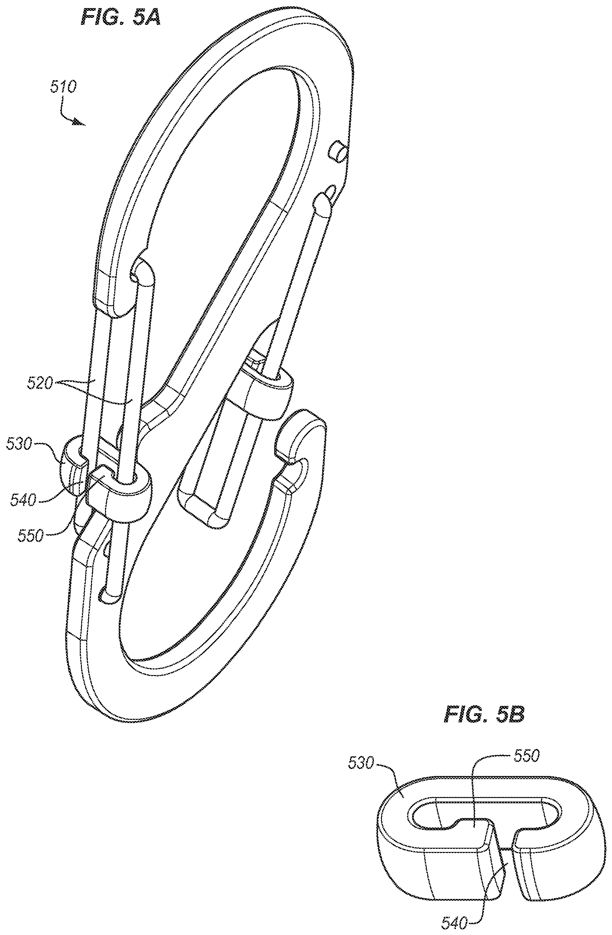

Fig. 5a and 5b show an embodiment of a locking double carabineer 510 according to the present invention. In this embodiment, an alternative sliding lock 530 is shown. Like the previous sliding lock 130, ) this sliding lock 530 serves to lock the gate 520 of the carabineer 510. The sliding lock 530 is more easily removed from the gate 520. Sliding lock 530 has an open g-like shape with opening 540 and tab 550. As above in reference to tab 410, tab 550 prevents the sliding lock 530 from sliding off the end of the carabineer 510. The opening 540 allows for the sliding lock 530 to be bent and removed and put on the gate 520.

## Claims

1. A locking double carabineer (510) comprising:
A body with an S-like shape having a first notch (140) and a second notch (140);
a first hook (110) and a second hook (110) oriented on the body;
a first gate (120) and a second gate (120), wherein the first gate (120) and second gate (120) are attached to the body and oriented to close the first hook (110) and second hook (110), respectively; and
a first sliding lock (530) and a second sliding lock (530), the first sliding lock (530) and the second sliding lock (530) oriented on the first gate (120) and the second gate (120), respectively, the first sliding lock (530) and second sliding lock (530) each having a first position, the first position being a locked position where the respective sliding lock (530) is positioned in the respective notch (140) in the body, and a second position, the second position being an unlocked position where the respective sliding lock (530) is distal from the respective notch (140), wherein the respective notch (140) is proximate to a pivot point of the respective gate (120), wherein the respective sliding lock (530) prevents the respective gate (120) from rotating to an open position by pressing against the respective notch (140),
wherein the sliding lock (530) and the second sliding lock (530) are configured to slide up and down the first gate (120) and the second gate (120), respectively, between the first position and the second position, wherein the first gate (120) and second gate (120) are each a wireframe gate, **characterized in that** the first sliding lock (530) and the second sliding lock (530) each having an open g-like shape with an opening (540) and a tab (550), the tab ( 550) sized to fit inside the respective wireframe gate to prevent the respective sliding lock (530) from sliding off the end of the respective wireframe gate, wherein the tab (550) provides for a reduced area of thickness and makes an end of the respective sliding lock (530) too thin to pass over the end of the respective wireframe gate (120).

## Patentansprüche

1. Verriegelbarer Doppelkarabiner (510), umfassend:
einen Körper mit einer S-artigen Form, der eine erste Kerbe (140) und eine zweite Kerbe (140) aufweist;
einen ersten Haken (110) und einen zweiten Haken (110), die an dem Körper ausgerichtet sind;
einen ersten Schnapper (120) und einen zweiten Schnapper (120), wobei der erste Schnapper (120) und der zweite Schnapper (120) an dem Körper angebracht und dazu angeordnet sind, den ersten Haken (110) bzw. den zweiten Haken (110) zu schließen; und eine erste Gleitverriegelung (530) und eine zweite Gleitverriegelung (530), wobei die erste Gleitverriegelung (530) und die zweite Gleitverriegelung (530) an dem ersten Schnapper (120) bzw. dem zweiten Schnapper (120) angeordnet sind, wobei die erste Gleitverriegelung (530) und die zweite Gleitverriegelung (530) jeweils eine erste Position aufweisen, wobei die erste Position eine verriegelte Position ist, in der die jeweilige Gleitverriegelung (530) in der jeweiligen Kerbe (140) in dem Körper positioniert ist, und eine zweite Position, wobei die zweite Position eine entriegelte Position ist, in der die jeweilige Gleitverriegelung (530) von der jeweiligen Kerbe (140) entfernt ist, wobei sich die jeweilige Kerbe (140) in der Nähe eines Drehpunkts des jeweiligen Schnappers (120) befindet, wobei die jeweilige Gleitverriegelung (530) verhindert, dass sich der jeweilige Schnapper (120) in eine offene Position dreht, indem sie gegen die jeweilige Kerbe (140) drückt,
wobei die Gleitverriegelung (530) und die zweite Gleitverriegelung (530) dazu eingerichtet sind, zwischen der ersten Position und der zweiten Position an dem ersten Schnapper (120) bzw. dem zweiten Schnapper (120) auf und ab zu gleiten, wobei der erste Schnapper (120) und der zweite Schnapper (120) jeweils ein Drahtschnapper sind, **dadurch gekennzeichnet, dass** die erste Gleitverriegelung (530) und die zweite Gleitverriegelung (530) jeweils eine offene, g-artige Form mit einer Öffnung (540) und einer Lasche (550) aufweisen, wobei die Lasche (550) so bemessen ist, dass sie in den jeweiligen Drahtschnapper passt, um zu verhindern, dass die jeweilige Gleitverriegelung (530) vom Ende des jeweiligen Drahtschnappers heruntergleitet, wobei die Lasche (550) einen Bereich verringerter Dicke bereitstellt und ein Ende der jeweiligen Gleitverriegelung (530) zu dünn macht, um über das Ende des jeweiligen Drahtschnappers (120) zu gelangen.

## Revendications

1. Mousqueton double verrouillable (510) comprenant :
un corps ayant une forme semblable à un S et comportant une première encoche (140) et une seconde encoche (140) ;
un premier crochet (110) et un second crochet (110) disposés sur le corps ;
un premier doigt (120) et un second doigt (120), le premier doigt (120) et le second doigt (120) étant fixés au corps et disposés de manière à fermer respectivement le premier crochet (110) et le second crochet (110) ; et
un premier verrou coulissant (530) et un second verrou coulissant (530), le premier verrou coulissant (530) et le second verrou coulissant (530) étant disposés respectivement sur le premier doigt (120) et le second doigt (120), le premier verrou coulissant (530) et le second verrou coulissant (530) ayant chacun une première position, la première position étant une position verrouillée dans laquelle le verrou coulissant respectif (530) est positionné dans l'encoche respective (140) ménagée dans le corps, et une seconde position, la seconde position étant une position déverrouillée dans laquelle le verrou coulissant respectif (530) est éloigné de l'encoche respective (140), l'encoche respective (140) étant située à proximité d'un point de pivotement du doigt respectif (120), le verrou coulissant respectif (530) empêchant le doigt respectif (120) de pivoter vers une position ouverte en prenant appui contre l'encoche respective (140),
le verrou coulissant (530) et le second verrou coulissant (530) étant configurés pour coulisser vers le haut et vers le bas, respectivement le long du premier doigt (120) et du second doigt (120), entre la première position et la seconde position, le premier doigt (120) et le second doigt (120) étant chacun un doigt en fil métallique, **caractérisé en ce que** le premier verrou coulissant (530) et le second verrou coulissant (530) présentent chacun une forme ouverte semblable à un g, comportant une ouverture (540) et une languette (550), la languette (550) étant dimensionnée pour s'insérer à l'intérieur du doigt en fil métallique respectif afin d'empêcher le verrou coulissant respectif (530) de glisser hors de l'extrémité du doigt en fil métallique respectif, la languette (550) procurant une zone d'épaisseur réduite et rendant une extrémité du verrou coulissant respectif (530) trop mince pour passer par-dessus l'extrémité du doigt en fil métallique respectif (120).
